# EUROPÄISCHE PATENTANMELDUNG

(11) **EP 4 015 108 A1**
(43) Veröffentlichungstag der Anmeldung: **22.06.2022**
(21) Anmeldenummer: 20214058.8
(22) Anmeldetag: 15.12.2020
(51) Int. Cl.: B22F 7/06, B22F 7/08, B23D 61/04, B23D 65/00, B23P 15/28, B24D 5/06, B24D 5/12, B24D 7/06, B24D 99/00, B28D 1/04, B28D 1/12, B22F 10/28, B22F 10/43, B33Y 10/00, B33Y 80/00, B22F 5/00

(54) **VERFAHREN ZUR HERSTELLUNG EINES BEARBEITUNGSSEGMENTES**

(71) Anmelder: Hilti Aktiengesellschaft, 9494 Schaan (LI)
(72) Erfinder: De Andrade Molero, Adriana, 09126 Chemnitz (DE); Sonderegger, Marcel, 9436 Balgach (CH); Klein, Thorsten, 9436 Balgach (CH); Moseley, Steven, 6820 Nenzing-Gurtis (AT)
(74) Vertreter: Hilti Aktiengesellschaft Corporate Intellectual Property

(57) **Zusammenfassung**

Verfahren zur Herstellung eines Bearbeitungssegmentes (51) aus einem ersten pulverförmigen Matrixwerkstoff (54) und ersten Hartstoffpartikeln (55), die gemäss einem definierten ersten Partikelmuster angeordnet werden mit den Schritten:
▪ Auftragen eines Stützmaterials (61) als Stützschicht (62), wobei die Schmelztemperatur des Stützmaterials (61) grösser als die Schmelztemperatur des ersten Matrixwerkstoffes (54) ist,
▪ Anordnen der ersten Hartstoffpartikel (55) gemäß dem definierten ersten Partikelmuster im Stützmaterial (61), wobei die ersten Hartstoffpartikel (55) mit einer Eindringtiefe (dᵢₙ) im Stützmaterial (61) angeordnet werden,
▪ Auftragen einer ersten Schicht (63) des ersten Matrixwerkstoffs (54) auf die ersten Hartstoffpartikel (55) und das Stützmaterial (61) und Aufschmelzen der ersten Schicht (63) mittels eines Powder bed fusion-Verfahrens und
▪ Ausführen einer Folge von mehreren Schritten, die N-fach, N ≥ 1 ausgeführt wird, wobei in einem ersten Schritt der Folge eine Schicht (64) des ersten Matrixwerkstoffs (54) auf den Schichtaufbau aufgetragen wird und in einem zweiten Schritt der Folge die Schicht (64) des ersten Matrixwerkstoffs (54) mittels des Powder bed fusion-Verfahrens aufgeschmolzen und mit dem Schichtaufbau verbunden wird.

## Beschreibung

### Technisches Gebiet

Die vorliegende Erfindung betrifft ein Verfahren zur Herstellung eines Bearbeitungssegmentes gemäß dem Oberbegriff des Anspruchs 1.

### Stand der Technik

Bearbeitungswerkzeuge, wie Kernbohrkronen, Sägeblätter, Abtragscheiben und Trennschleifketten, umfassen Bearbeitungssegmente, die an einem rohr-, scheiben- oder ringförmigen Grundkörper befestigt werden, wobei die Bearbeitungssegmente durch Schweißen, Löten oder Kleben mit dem Grundkörper verbunden werden. Abhängig vom Bearbeitungsverfahren des Bearbeitungswerkzeugs werden Bearbeitungssegmente, die zum Kernbohren eingesetzt werden, als Bohrsegmente, Bearbeitungssegmente, die zum Sägen eingesetzt werden, als Sägesegmente, Bearbeitungssegmente, die zum Abtragen eingesetzt werden, als Abtragsegmente und Bearbeitungssegmente, die zum Trennschleifen eingesetzt werden, als Trennschleifsegmente bezeichnet.

Bearbeitungssegmente für Kernbohrkronen, Sägeblätter, Abtragscheiben und Trennschleifketten werden aus einem Matrixwerkstoff und Hartstoffpartikeln hergestellt, wobei die Hartstoffpartikel statistisch verteilt vorliegen können oder gemäß einem definierten Partikelmuster im Matrixwerkstoff angeordnet sind. Bei Bearbeitungssegmenten mit statistisch verteilten Hartstoffpartikeln werden der Matrixwerkstoff und die Hartstoffpartikel gemischt, die Mischung wird in eine passende Werkzeugform eingefüllt und zum Bearbeitungssegment weiterverarbeitet. Bei Bearbeitungssegmenten mit gesetzten Hartstoffpartikeln wird ein Grünling schichtweise aus Matrixwerkstoff aufgebaut, in den die Hartstoffpartikel gemäß dem definierten Partikelmuster platziert werden. Bei Bearbeitungssegmenten, die mit dem Grundkörper des Bearbeitungswerkzeuges verschweißt werden, hat sich der Aufbau aus einer Bearbeitungszone und einer Neutralzone bewährt. Die Bearbeitungszone wird aus einem ersten Matrixwerkstoff und die Neutralzone aus einem zweiten Matrixwerkstoff, der vom ersten Matrixwerkstoff verschieden ist, aufgebaut.

Bearbeitungswerkzeuge, die als Kernbohrkrone, Sägeblatt, Abtragscheibe oder Trennschleifkette ausgebildet sind und für die Nassbearbeitung von Betonwerkstoffen vorgesehen sind, sind für die Trockenbearbeitung von Betonwerkstoffen nur bedingt geeignet. Bei der Nassbearbeitung von Betonwerkstoffen entsteht ein abrasiver Betonschlamm, der den Bearbeitungsprozess unterstützt und zu einem Selbstschärfen der Bearbeitungssegmente während der Bearbeitung führt. Der Matrixwerkstoff wird durch den abrasiven Betonschlamm abgetragen und neue Hartstoffpartikel werden freigelegt. Bei der Trockenbearbeitung von Betonwerkstoffen kann sich kein abrasiver Betonschlamm bilden, der den Bearbeitungsprozess unterstützen kann. Die Hartstoffpartikel werden schnell stumpf und die Bearbeitungsrate sinkt. Durch den fehlenden Betonschlamm verschleißt der Matrixwerkstoff zu langsam und tiefer liegende Hartstoffpartikel können nicht freigelegt werden. Bei bekannten Bearbeitungswerkzeugen zur Nassbearbeitung weisen der Matrixwerkstoff und die Hartstoffpartikel ähnliche Verschleißraten auf.

### Darstellung der Erfindung

Die Aufgabe der vorliegenden Erfindung besteht darin, ein alternatives Verfahren zur Herstellung eines Bearbeitungssegmentes zu entwickeln, mit dem Bearbeitungssegmente hergestellt werden können, die für die Trockenbearbeitung von Betonwerkstoffen geeignet sind. Dabei soll das Bearbeitungssegment bei der Trockenbearbeitung von Betonwerkstoffen eine hohe Bearbeitungsrate und eine möglichst lange Lebensdauer aufweisen.

Diese Aufgabe wird bei dem eingangs genannten Verfahren erfindungsgemäß durch die Merkmale des unabhängigen Anspruchs 1 gelöst. Vorteilhafte Weiterbildungen sind in den abhängigen Ansprüchen angegeben.

Das Verfahren zur Herstellung eines Bearbeitungssegmentes ist erfindungsgemäß gekennzeichnet durch die Schritte:
▪ Auftragen eines Stützmaterials als Stützschicht, wobei die Schmelztemperatur des Stützmaterials grösser als die Schmelztemperatur des ersten Matrixwerkstoffes,
▪ Anordnen der ersten Hartstoffpartikel gemäß dem definierten ersten Partikelmuster im Stützmaterial, wobei die ersten Hartstoffpartikel mit einer Eindringtiefe im Stützmaterial angeordnet werden,
▪ Auftragen einer ersten Schicht des ersten Matrixwerkstoffs auf die ersten Hartstoffpartikel und das Stützmaterial und Aufschmelzen der ersten Schicht mittels eines Powder bed fusion-Verfahrens und
▪ Ausführen einer Folge von mehreren Schritten, die N-fach, N ≥ 1 ausgeführt wird, wobei in einem ersten Schritt der Folge eine Schicht des ersten Matrixwerkstoffs auf den Schichtaufbau aufgetragen wird und in einem zweiten Schritt der Folge die Schicht des ersten Matrixwerkstoffs mittels des Powder bed fusion-Verfahrens aufgeschmolzen und mit dem Schichtaufbau verbunden wird.

Das erfindungsgemäße Verfahren zur Herstellung eines Bearbeitungssegmentes zeichnet sich dadurch aus, dass die Bearbeitungssegmente stehend von oben nach unten aufgebaut werden, d.h. die Aufbaurichtung verläuft senkrecht zur Höhenrichtung zwischen der Unterseite und Oberseite der Bearbeitungssegmente. Der Überstand der ersten Hartstoffpartikel an der Oberseite der Bearbeitungssegmente wird mithilfe des Stützmaterials erzeugt, das vom ersten Matrixwerkstoff verschieden ist. Dabei weist das Stützmaterial eine Schmelztemperatur auf, die höher als die Schmelztemperatur des ersten Matrixwerkstoffes ist. Dadurch, dass die Schmelztemperatur des Stützmaterials höher als die Schmelztemperatur des ersten Matrixwerkstoffes ist, bleibt das Stützmaterial pulverförmig und kann problemlos vom fertigen Bearbeitungssegment entfernt werden. Beim Aufschmelzen des ersten Matrixwerkstoffs bleibt das Stützmaterial in seinem pulverförmigen Zustand und fixiert die Position der ersten Hartstoffpartikel.

Nach dem Auftragen wird der erste Matrixwerkstoff aufgeschmolzen und mit dem Schichtaufbau verbunden. Zum Aufschmelzen des ersten Matrixwerkstoffs eignen sich sämtliche bekannten sowie zukünftigen Powder bed fusion-Verfahren mit Laserstrahl oder Elektronenstrahl. Welches Powder bed fusion-Verfahren verwendet wird, spielt für das erfindungsgemäße Verfahren zur Herstellung eines Bearbeitungssegmentes keine Rolle. Wichtig ist, dass der erste Matrixwerkstoff aufgeschmolzen und mit dem darunter liegenden Schichtaufbau verbunden wird.

Das erfindungsgemäße Verfahren ermöglicht die Herstellung von Bearbeitungssegmenten, die an ihrer Oberseite erste Hartstoffpartikel mit einem Überstand aufweisen und daher für die Trockenbearbeitung von Betonwerkstoffen geeignet sind. Das erfindungsgemäße Verfahren hat den Vorteil, dass am Ende des Schichtaufbaus das fertige Bearbeitungssegment entnommen werden kann und kein weiterer Verarbeitungsprozess in Form von Sintern oder Heißpressen erforderlich ist.

In einer ersten Weiterentwicklung umfasst die Folge einen Zwischenschritt, der zwischen dem ersten Schritt und zweiten Schritt der Folge ausgeführt wird, wobei im Zwischenschritt zweite Hartstoffpartikel gemäss einem definierten zweiten Partikelmuster in der Schicht des ersten Matrixwerkstoffs angeordnet werden. Während der Bearbeitung mit dem Bearbeitungssegment kann es durch Reibung zu einem verstärkten Verschleiß des ersten Matrixwerkstoffes an den Seitenflächen des Bearbeitungssegmentes kommen. Dieser Verschleiß kann durch die zweiten Hartstoffpartikel reduziert werden. Die Anordnung der zweiten Hartstoffpartikel gemäß dem definierten zweiten Partikelmuster hat gegenüber statistisch verteilten zweiten Hartstoffpartikel den Vorteil, dass die zweiten Hartstoffpartikel in den Seitenflächen angeordnet werden können und den Verschleiß an den Seitenflächen reduzieren können.

In einer alternativen Weiterentwicklung werden dem ersten Matrixwerkstoff zweite Hartstoffpartikel beigemischt, wobei ein mittlerer Partikeldurchmesser der zweiten Hartstoffpartikel kleiner als ein mittlerer Partikeldurchmesser der ersten Hartstoffpartikel ist. Während der Bearbeitung mit dem Bearbeitungssegment kann es durch Reibung zu einem verstärkten Verschleiß des ersten Matrixwerkstoffes an den Seitenflächen des Bearbeitungssegmentes kommen. Dieser Verschleiß kann durch die zweiten Hartstoffpartikel reduziert werden.

Bevorzugt wird nach der N-ten Folge mindestens eine Schicht eines zweiten Matrixwerkstoffs aufgetragen und mittels des Powder bed fusion-Verfahrens aufgeschmolzen und mit dem Schichtaufbau verbunden, wobei der zweite Matrixwerkstoff vom ersten Matrixwerkstoff verschieden ist. Der zweite Matrixwerkstoff ermöglicht den Aufbau einer Neutralzone. Neutralzonen werden bei Bearbeitungssegmenten genutzt, wenn die Bearbeitungssegmente mit dem Grundkörper eines Bearbeitungswerkzeuges verschweißt werden sollen und die Kombination aus erstem Matrixwerkstoff und Grundkörper nicht schweißbar ist. Der zweite Matrixwerkstoff wird im Hinblick auf eine gute Schweißbarkeit in Kombination mit dem Grundkörper ausgewählt.

Bevorzugt weisen die ersten Hartstoffpartikel einen mittleren Partikeldurchmesser auf und werden maximal bis zum halben mittleren Partikeldurchmesser in das Stützmaterial eingebettet. Der Überstand der ersten Hartstoffpartikel an der Oberseite der Bearbeitungssegmente entspricht der Eindringtiefe, mit der die ersten Hartstoffpartikel in das Stützmaterial eingebettet werden. Da die Eindringtiefe der ersten Hartstoffpartikel maximal 50 % des mittleren Partikeldurchmessers der ersten Hartstoffpartikel beträgt, ist gewährleistet, dass die ersten Hartstoffpartikel beim fertigen Bearbeitungssegment sicher im ausgeschmolzenen ersten Matrixwerkstoff befestigt sind.

### Ausführungsbeispiele

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:
- FIGN. 1A, B: zwei Varianten eines als Kernbohrkrone ausgebildeten Bearbeitungswerkzeuges;
- FIGN. 2A, B: zwei Varianten eines als Sägeblatt ausgebildeten Bearbeitungswerkzeuges;
- FIG. 3: ein als Abtragscheibe ausgebildetes Bearbeitungswerkzeug;
- FIG. 4: ein als Trennschleifkette ausgebildetes Bearbeitungswerkzeug;
- FIGN. 5A-C: einen Grünling (FIG. 5A), der zu einem Pressling verdichtet (FIG. 5B) und zu einem Bearbeitungssegment weiterverarbeitet wird (FIG. 5C);
- FIGN. 6A-D: die Herstellung des Grünlings der FIG. 5A mithilfe des erfindungsgemäßen Verfahrens zur Herstellung eines Grünlings;
- FIGN. 7A, B: einen Grünling (FIG. 7A), der zu einem Bearbeitungssegment weiterverarbeitet wird (FIG. 7B).

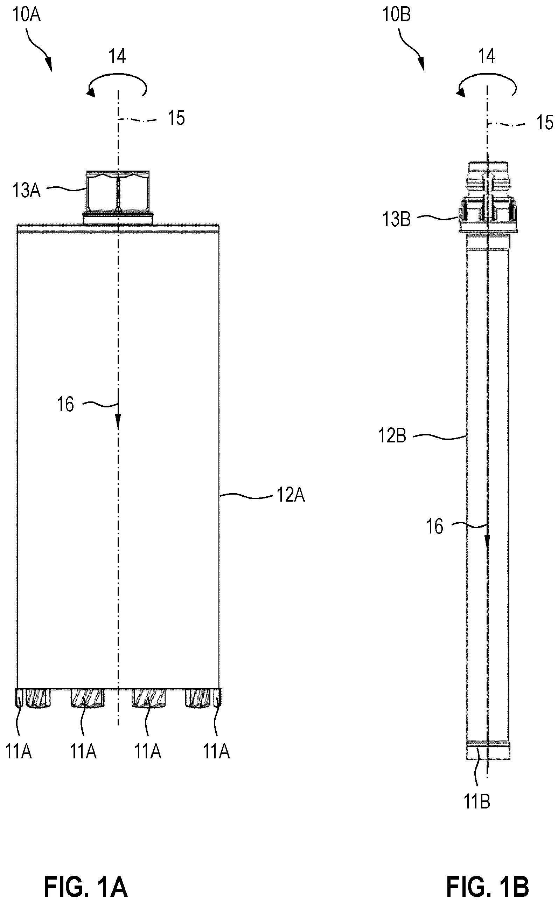

**FIGN. 1A****, B** zeigen zwei Varianten eines als Kernbohrkrone **10A, 10B** ausgebildeten Bearbeitungswerkzeuges. Die in FIG. 1A dargestellte Kernbohrkrone 10A wird im Weiteren als erste Kernbohrkrone und die in FIG. 1B dargestellte Kernbohrkrone 10B als zweite Kernbohrkrone bezeichnet, ausserdem werden die erste und zweite Kernbohrkrone 10A, 10B unter dem Begriff "Kernbohrkrone" zusammengefasst.

Die erste Kernbohrkrone 10A umfasst mehrere Bearbeitungssegmente **11A,** einen rohrförmig ausgebildeten Grundkörper **12A** und eine Werkzeugaufnahme **13A.** Die Bearbeitungssegmente 11A, die zum Kernbohren eingesetzt werden, werden auch als Bohrsegmente bezeichnet und der rohrförmig ausgebildete Grundkörper 12A wird auch als Bohrschaft bezeichnet. Die Bohrsegmente 11A sind fest mit dem Bohrschaft 12A verbunden, beispielsweise durch Schrauben, Kleben, Löten oder Schweißen.

Die zweite Kernbohrkrone 10B umfasst ein ringförmiges Bearbeitungssegment **11B,** einen rohrförmig ausgebildeten Grundkörper **12B** und eine Werkzeugaufnahme **13B.** Das ringförmige Bearbeitungssegment 11B, das zum Kernbohren eingesetzt wird, wird auch als Bohrring bezeichnet und der rohrförmig ausgebildete Grundkörper 12B wird auch als Bohrschaft bezeichnet. Der Bohrring 11B ist fest mit dem Bohrschaft 12B verbunden, beispielsweise durch Schrauben, Kleben, Löten oder Schweißen.

Die Kernbohrkrone 10A, 10B wird über die Werkzeugaufnahme 13A, 13B mit einem Kernbohrgerät verbunden und im Bohrbetrieb vom Kernbohrgerät in einer Drehrichtung **14** um eine Drehachse **15** angetrieben. Während der Drehung der Kernbohrkrone 10A, 10B um die Drehachse 15 wird die Kernbohrkrone 10A, 10B entlang einer Vorschubrichtung **16** in ein zu bearbeitendes Werkstück bewegt, wobei die Vorschubrichtung 16 parallel zur Drehachse 15 verläuft. Die Kernbohrkrone 10A, 10B erzeugt im zu bearbeitenden Werkstück einen Bohrkern und ein Bohrloch.

Der Bohrschaft 12A, 12B ist im Ausführungsbeispiel der FIGN. 1A, B einteilig ausgebildet und die Bohrsegmente 11A bzw. der Bohrring 11B sind fest mit dem Bohrschaft 12A, 12B verbunden. Alternativ kann der Bohrschaft 12A, 12B zweiteilig aus einem ersten Bohrschaftabschnitt und einem zweiten Bohrschaftabschnitt ausgebildet sein, wobei die Bohrsegmente 11A bzw. der Bohrring 11B fest mit dem ersten Bohrschaftabschnitt und die Werkzeugaufnahme 13A, 13B fest mit dem zweiten Bohrschaftabschnitt verbunden ist. Der erste und zweite Bohrschaftabschnitt werden über eine lösbare Verbindungseinrichtung miteinander verbunden. Die lösbare Verbindungseinrichtung ist beispielsweise als Steck-Dreh-Verbindung, wie in EP 2 745 965 A1 oder EP 2 745 966 A1 beschrieben, ausgebildet. Die Ausbildung des Bohrschaftes als einteiliger oder zweiteiliger Bohrschaft hat keinen Einfluss auf den Aufbau der Bohrsegmente 11A bzw. des Bohrringes 11B.

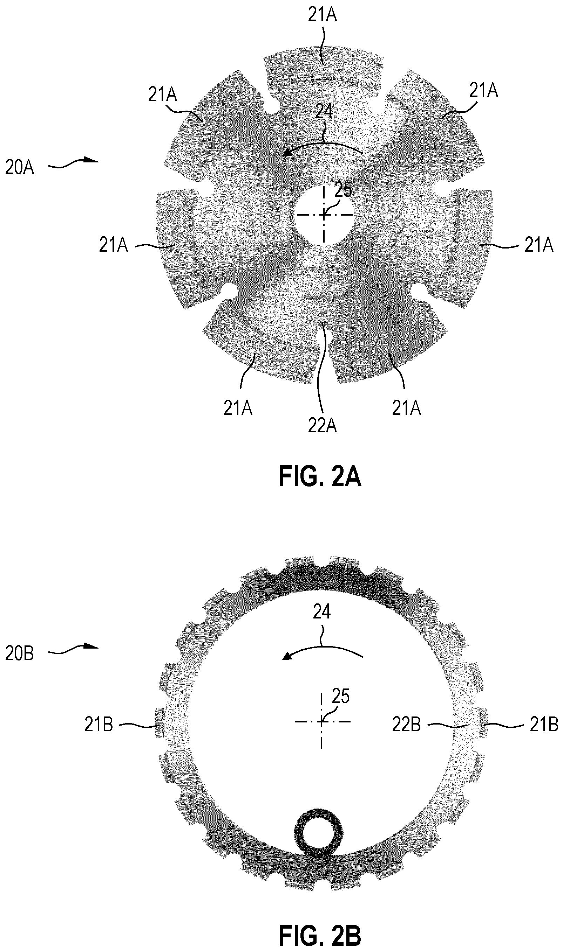

**FIGN. 2A****, B** zeigen zwei Varianten eines als Sägeblatt **20A, 20B** ausgebildeten Bearbeitungswerkzeuges. Das in FIG. 2A dargestellte Sägeblatt 20A wird im Weiteren als erstes Sägeblatt und das in FIG. 2B dargestellte Sägeblatt 20B als zweites Sägeblatt bezeichnet, ausserdem werden das erste und zweite Sägeblatt 20A, 20B unter dem Begriff "Sägeblatt" zusammengefasst.

Das erste Sägeblatt 20A umfasst mehrere Bearbeitungssegmente **21A,** einen scheibenförmig ausgebildeten Grundkörper **22A** und eine Werkzeugaufnahme. Die Bearbeitungssegmente 21A, die zum Sägen eingesetzt werden, werden auch als Sägesegmente bezeichnet und der scheibenförmig ausgebildete Grundkörper 22A wird auch als Stammblatt bezeichnet. Die Sägesegmente 21A sind fest mit dem Stammblatt 22A verbunden, beispielsweise durch Schrauben, Kleben, Löten oder Schweißen.

Das zweite Sägeblatt 20B umfasst mehrere Bearbeitungssegmente **21B,** einen ringförmig ausgebildeten Grundkörper **22B** und eine Werkzeugaufnahme. Die Bearbeitungssegmente 21B, die zum Sägen eingesetzt werden, werden auch als Sägesegmente bezeichnet und der ringförmig ausgebildete Grundkörper 22B wird auch als Ring bezeichnet. Die Sägesegmente 21B sind fest mit dem Ring 22B verbunden, beispielsweise durch Schrauben, Kleben, Löten oder Schweißen.

Das Sägeblatt 20A, 20B wird über die Werkzeugaufnahme mit einer Säge verbunden und im Sägebetrieb von der Säge in einer Drehrichtung **24** um eine Drehachse **25** angetrieben. Während der Drehung des Sägeblattes 20A, 20B um die Drehachse 25 wird das Sägeblatt 20A, 20B entlang einer Vorschubrichtung bewegt, wobei die Vorschubrichtung parallel zur Längsebene des Sägeblattes 20A, 20B verläuft. Das Sägeblatt 20A, 20B erzeugt im zu bearbeitenden Werkstück einen Sägeschlitz.

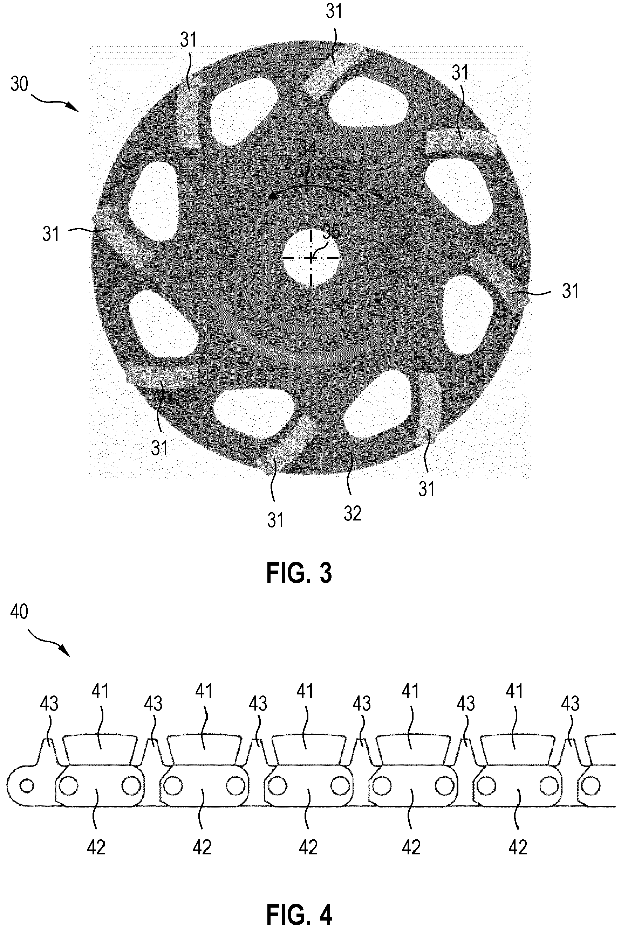

**FIG. 3** zeigt ein als Abtragscheibe **30** ausgebildetes Bearbeitungswerkzeug. Die Abtragscheibe 30 umfasst mehrere Bearbeitungssegmente **31,** einen Grundkörper **32** und eine Werkzeugaufnahme. Die Bearbeitungssegmente 31, die zum Abtragen eingesetzt werden, werden auch als Abtragsegmente bezeichnet und der scheibenförmig ausgebildete Grundkörper 32 wird auch als Topf bezeichnet. Die Abtragsegmente 31 sind fest mit dem Topf 32 verbunden, beispielsweise durch Schrauben, Kleben, Löten oder Schweißen.

Die Abtragscheibe 30 wird über die Werkzeugaufnahme mit einem Werkzeuggerät verbunden und im Abtragbetrieb vom Werkzeuggerät in einer Drehrichtung **34** um eine Drehachse **35** angetrieben. Während der Drehung der Abtragscheibe 30 um die Drehachse 35 wird die Abtragscheibe 30 über ein zu bearbeitendes Werkstück bewegt, wobei die Bewegung der senkrecht zur Drehachse 35 verläuft. Die Abtragscheibe 30 entfernt die Oberfläche des zu bearbeitenden Werkstücks.

**FIG. 4** zeigt ein als Trennschleifkette **40** ausgebildetes Bearbeitungswerkzeug. Die Trennschleifkette 40 umfasst mehrere Bearbeitungssegmente **41,** mehrere gliedförmig ausgebildete Grundkörper **42** und mehrere Verbindungsglieder **43.** Die Bearbeitungssegmente 41, die zum Trennschleifen eingesetzt werden, werden auch als Trennschleifsegmente bezeichnet und die gliedförmig ausgebildeten Grundkörper 42 werden auch als Treibglieder bezeichnet.

Die Treibglieder 42 werden über die Verbindungsglieder 43 verbunden. Im Ausführungsbeispiel sind die Verbindungsglieder 43 über Nietbolzen mit den Treibgliedern 42 verbunden. Die Nietbolzen ermöglichen eine Drehung der Treibglieder 42 relativ zu den Verbindungsgliedern 43 um eine Drehachse, die durch das Zentrum der Nietbolzen verläuft. Die Bearbeitungssegmente 41 sind fest mit den Treibgliedern 42 verbunden, beispielsweise durch Schrauben, Kleben, Löten oder Schweißen.

Die Trennschleifkette 40 wird über eine Werkzeugaufnahme mit einem Werkzeuggerät verbunden und im Betrieb vom Werkzeuggerät in einer Drehrichtung angetrieben. Während der Drehung der Trennschleifkette 40 wird die Trennschleifkette 40 in ein zu bearbeitendes Werkstück bewegt.

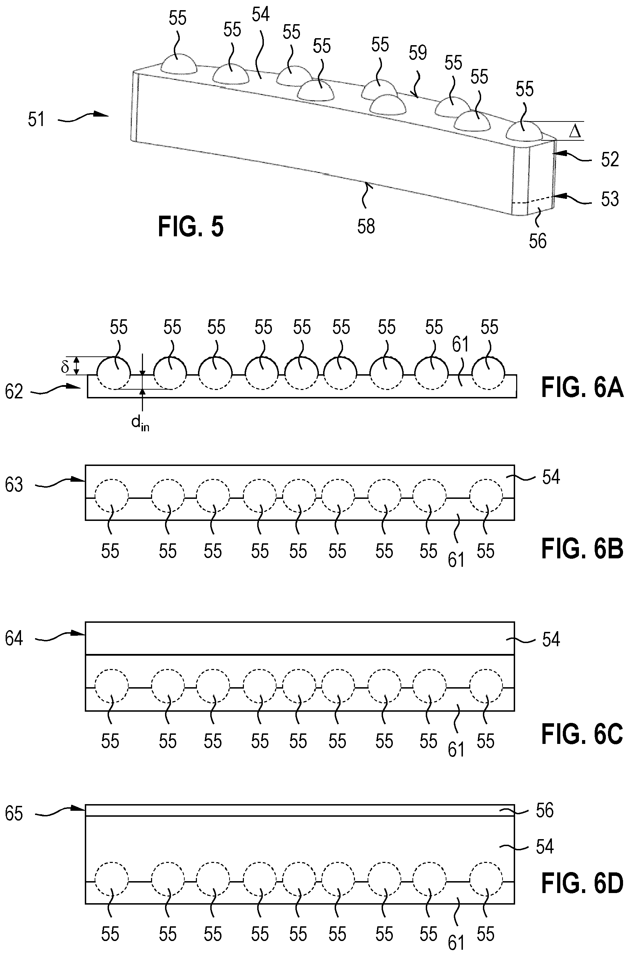

**FIG. 5** zeigt ein Bearbeitungssegment **51,** das mittels des erfindungsgemäßen Verfahrens zur Herstellung eines Bearbeitungssegmentes hergestellt wurde. Das Bearbeitungssegment 51 ist aus einer Bearbeitungszone **52** und einer Neutralzone **53** aufgebaut. Die Neutralzone 53 ist erforderlich, wenn das Bearbeitungssegment 51 mit dem Grundkörper eines Bearbeitungswerkzeuges verschweißt werden soll und die Kombination aus Matrixwerkstoff und Grundkörper nicht schweißbar ist; bei schweißbaren Kombinationen aus Matrixwerkstoff und Grundkörper kann die Neutralzone 53 entfallen.

Die Bearbeitungszone 52 ist aus einem pulver- oder granulatförmigen ersten Matrixwerkstoff **54** und ersten Hartstoffpartikeln **55,** die gemäß einem definierten ersten Partikelmuster angeordnet sind, aufgebaut und die Neutralzone 53 ist aus einem pulver- oder granulatförmigen zweiten Matrixwerkstoff **56** aufgebaut. Unter dem Begriff "Matrixwerkstoff" werden sämtliche Werkstoffe zum Aufbau von Bearbeitungssegmenten zusammengefasst, in die Hartstoffpartikel eingebettet werden können. Matrixwerkstoffe können aus einem Werkstoff bestehen oder als Gemisch aus verschiedenen Werkstoffen zusammengesetzt sein. Unter dem Begriff "Hartstoffpartikel" werden sämtliche Schneidmittel für Bearbeitungssegmente zusammengefasst; dazu gehören vor allem einzelne Hartstoffpartikel, Verbundteile aus mehreren Hartstoffpartikeln und beschichtete oder gekapselte Hartstoffpartikel.

Das Bearbeitungssegment 51 entspricht vom Aufbau und der Zusammensetzung den Bearbeitungssegmenten 11A, 21A, 21B, 31, 41; das als Bohrring ausgebildete Bearbeitungssegment 11B unterscheidet sich durch seinen ringförmigen Aufbau vom Bearbeitungssegment 51. Die Bearbeitungssegmente können sich in den Abmessungen und in den Krümmungen der Oberflächen voneinander unterscheiden. Der Aufbau der Bearbeitungssegmente wird anhand des Bearbeitungssegmentes 51 erklärt und gilt für die Bearbeitungssegmente 11A, 21A, 21B, 31, 41.

Das Bearbeitungssegment 51 umfasst die ersten Hartstoffpartikel 55, die im ersten Matrixwerkstoff 54 angeordnet sind. Als "erste Hartstoffpartikel" werden die Hartstoffpartikel des Bearbeitungssegmentes 51 bezeichnet, die einen Untergrund bearbeiten, wobei die Anzahl der ersten Hartstoffpartikel 55 und das definierte erste Partikelmuster, gemäß dem die ersten Hartstoffpartikel 55 im ersten Matrixwerkstoff 54 angeordnet sind, an die Anforderungen des Bearbeitungssegmentes 51 angepasst werden. Die ersten Hartstoffpartikel 55 entstammen in der Regel einer Partikelverteilung, die durch einen minimalen Durchmesser, einen maximalen Durchmesser und einen mittleren Durchmesser **dₘᵢₜₜₑₗ** charakterisiert ist.

Das Bearbeitungssegment 51 wird mit einer Unterseite **58** mit dem Grundkörper des Bearbeitungswerkzeuges verbunden. Bei Bearbeitungssegmenten zum Kernbohren und Bearbeitungssegmenten zum Abtragen ist die Unterseite der Bearbeitungssegmente in der Regel eben ausgebildet, wohingegen die Unterseite bei Bearbeitungssegmenten zum Sägen eine Krümmung aufweist, um die Bearbeitungssegmente an der gekrümmten Stirnfläche der ring- oder scheibenförmigen Grundkörper befestigen zu können. Bei dem in FIG. 5 gezeigten Bearbeitungssegment 51 weisen die ersten Hartstoffpartikel 55 an einer der Unterseite 58 gegenüberliegenden Oberseite **59** einen Überstand Δ gegenüber dem ersten Matrixwerkstoff 54 auf.

**FIGN. 6A-D** zeigen die Herstellung des Bearbeitungssegmentes 51 mithilfe des erfindungsgemäßen Verfahrens zur Herstellung eines Bearbeitungssegmentes. Das Bearbeitungssegment 51 wird im stehenden Aufbau von oben nach unten aus dem ersten Matrixwerkstoff 54, den ersten Hartstoffpartikeln 55, dem zweiten Matrixwerkstoff 56 und einem pulverförmigen Stützmaterial **61** aufgebaut. Das Stützmaterial 61 ist vom ersten Matrixwerkstoff 54 verschieden und dient dazu, die ersten Hartstoffpartikel 55 zu stützen, so dass diese ihre Position gemäß dem definierten ersten Partikelmuster einhalten können. Das Stützmaterial 61 weist eine Schmelztemperatur **T_{schmelz}** auf, die grösser als die Schmelztemperatur **T₁** des ersten Matrixwerkstoffes 54 ist.

Die Herstellung des Bearbeitungssegmentes 51 erfolgt in mehreren Schritten: In einem ersten Schritt wird eine Stützschicht **62** des Stützmaterials 61 aufgetragen und in einem zweiten Schritt werden die ersten Hartstoffpartikel 55 gemäß dem definierten ersten Partikelmuster im Stützmaterial 61 angeordnet, wobei die ersten Hartstoffpartikel 55 mit einem Überstand δ im Stützmaterial 61 angeordnet werden (FIG. 6A); die Eindringtiefe **d**ᵢₙ der ersten Hartstoffpartikel 55 beträgt maximal 50 % des mittleren Partikeldurchmessers dₘᵢₜₜₑₗ der ersten Hartstoffpartikel 55. Da die Eindringtiefe dᵢₙ der ersten Hartstoffpartikel 55 maximal 50 % des mittleren Partikeldurchmessers beträgt, ist gewährleistet, dass die ersten Hartstoffpartikel 55 beim fertigen Bearbeitungssegment 51 sicher im ersten Matrixwerkstoff 54 befestigt sind.

In einem dritten Schritt wird eine erste Schicht **63** des ersten Matrixwerkstoffs 54 auf die ersten Hartstoffpartikel 55 und das Stützmaterial 61 aufgetragen und mittels eines Powder bed fusion-Verfahrens aufgeschmolzen (FIG. 6B). Die Herstellung des Bearbeitungssegmentes 51 wird mit einer Folge von Schritten fortgesetzt, wobei die Folge einfach oder mehrfach (N-fach mit N ≥ 1) durchgeführt werden kann; im Ausführungsbeispiel wird die Folge einfach durchgeführt. In einem ersten Schritt der Folge wird eine Schicht **64** des ersten Matrixwerkstoffs 54 auf den bisherigen Schichtaufbau aufgetragen (FIG. 6C) und in einem zweiten Schritt der Folge wird die Schicht 64 des ersten Matrixwerkstoffs 54 mittels des Powder bed fusion-Verfahrens aufgeschmolzen.

Im Anschluss an die Folge wird in einem weiteren Schritt des erfindungsgemäßen Verfahrens eine Schicht **65** des zweiten Matrixwerkstoffs 56 auf den bisherigen Schichtaufbau aufgetragen und mittels des Powder bed fusion-Verfahrens aufgeschmolzen und dabei mit dem bisherigen Schichtaufbau verbunden.

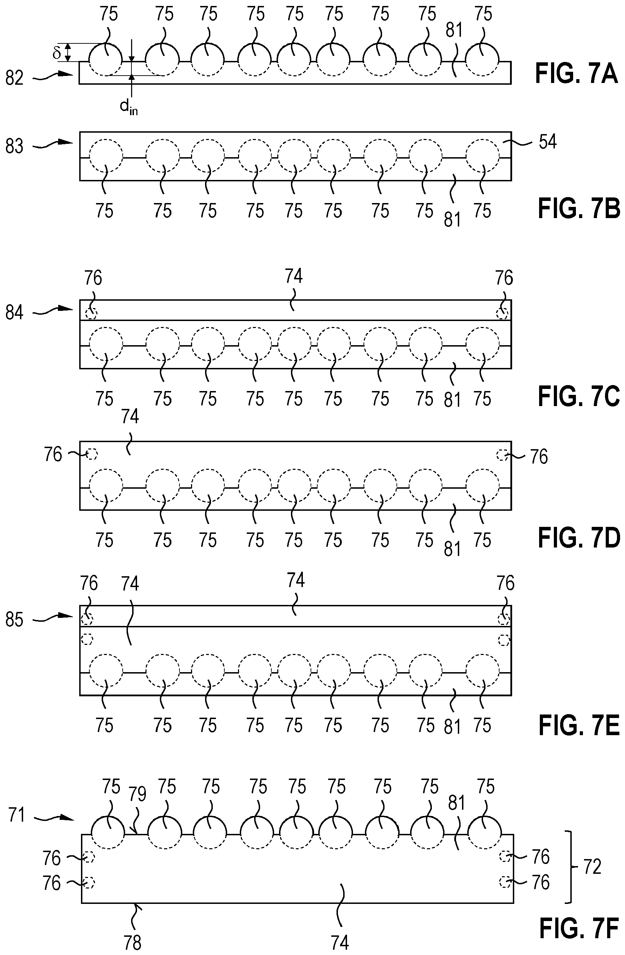

**FIGN. 7A-F** zeigen ein weiteres Bearbeitungssegment **71,** das mit dem erfindungsgemäßen Verfahren zur Herstellung eines Bearbeitungssegmentes hergestellt wurde. Dabei zeigen die FIGN. 7A-E die Zwischenprodukte des Bearbeitungssegmentes 71 und FIG. 7F zeigt das fertige Bearbeitungssegment 71.

Das Bearbeitungssegment 71 unterscheidet sich vom Bearbeitungssegment 51 der FIG. 5 dadurch, dass das Bearbeitungssegment 71 nur eine Bearbeitungszone **72** und keine Neutralzone aufweist. Die Bearbeitungszone 72 wird aus einem pulver- oder granulatförmigen ersten Matrixwerkstoff **74,** ersten Hartstoffpartikeln **75,** die gemäß einem definierten ersten Partikelmuster angeordnet sind, und zweiten Hartstoffpartikeln **76,** die gemäß einem definierten zweiten Partikelmuster angeordnet sind, aufgebaut.

Während der Bearbeitung eines Untergrundes mit dem Bearbeitungssegment 71 kann es durch Reibung mit dem Untergrund zu einem verstärkten Verschleiß des ersten Matrixwerkstoffes 74 an den Seitenflächen des Bearbeitungssegmentes 71 kommen. Dieser Verschleiß kann durch die zweiten Hartstoffpartikel 76 reduziert werden. Beim Bearbeitungssegment 71 wurden die zweiten Hartstoffpartikel 76 gemäß dem definierten zweiten Partikelmuster im ersten Matrixwerkstoff 74 angeordnet; alternativ können die zweiten Hartstoffpartikel 76 als statistisch verteilte Partikel dem ersten Matrixwerkstoff 74 beigemischt werden.

Die ersten Hartstoffpartikel 75 und zweiten Hartstoffpartikel 76 entstammen in der Regel Partikelverteilungen, die durch einen minimalen Durchmesser, einen maximalen Durchmesser und einen mittleren Durchmesser charakterisiert sind. Beim Bearbeitungssegment 71 entstammen die ersten Hartstoffpartikel 75 einer ersten Partikelverteilung mit einem ersten mittleren Durchmesser **d_{mittel,1}** und die zweiten Hartstoffpartikel 76 einer zweiten Partikelverteilung mit einem zweiten mittleren Durchmesser **d_{mittel,2},** wobei der erste mittlere Durchmesser grösser als der zweite mittlere Durchmesser ist. Alternativ können die ersten Hartstoffpartikel 75 und zweiten Hartstoffpartikel 76 der gleichen Partikelverteilung entstammen und den gleichen mittleren Durchmesser aufweisen.

Das Bearbeitungssegment 71 wird mit einer Unterseite **78** mit dem Grundkörper eines Bearbeitungswerkzeuges verbunden. Die Bearbeitung eines Untergrundes erfolgt durch die ersten Hartstoffpartikel 75, die an einer der Unterseite 78 gegenüberliegenden Oberseite **79** angeordnet sind. Das Bearbeitungssegment 71 wird im stehenden Aufbau von oben nach unten aus dem ersten Matrixwerkstoff 74, den ersten Hartstoffpartikeln 75, den zweiten Hartstoffpartikein 76 und einem pulverförmigen Stützmaterial **81** aufgebaut. Das Stützmaterial 81 ist vom ersten Matrixwerkstoff 74 verschieden und dient dazu, die ersten Hartstoffpartikel 75 zu stützen, so dass diese ihre Position gemäß dem definierten ersten Partikelmuster einhalten können. Das Stützmaterial 81 weist eine Schmelztemperatur **T_{schmelz}** auf, die grösser als die Schmelztemperatur **T₁** des ersten Matrixwerkstoffes 74 ist.

Die Herstellung des Bearbeitungssegmentes 71 erfolgt in mehreren Schritten: In einem ersten Schritt wird eine Stützschicht **82** des Stützmaterials 81 aufgetragen und in einem zweiten Schritt werden die ersten Hartstoffpartikel 75 gemäß dem definierten ersten Partikelmuster im Stützmaterial 81 angeordnet (FIG. 7A), wobei die ersten Hartstoffpartikel 75 nicht vollständig in das Stützmaterial 81 eingebettet werden, sondern einen Überstand δ gegenüber dem Stützmaterial 81 aufweisen; die Eindringtiefe **d**ᵢₙ der ersten Hartstoffpartikel 75 beträgt maximal 50 % des ersten mittleren Partikeldurchmessers d_{mittel,1} der ersten Hartstoffpartikel 75. In einem dritten Schritt wird eine erste Schicht **83** des ersten Matrixwerkstoffes 74 auf die ersten Hartstoffpartikel 75 und das Stützmaterial 81 aufgetragen und mittels eines Powder bed fusion-Verfahrens aufgeschmolzen (FIG. 7B)

Die Herstellung des Bearbeitungssegmentes 71 wird mit einer Folge von Schritten fortgesetzt, wobei die Folge einfach oder mehrfach (N-fach mit N ≥ 1) durchgeführt wird; beim Bearbeitungssegment 71 wird die Folge zweifach durchgeführt. In einem ersten Schritt der ersten Folge wird eine Schicht **84** des ersten Matrixwerkstoffs 74 aufgetragen, in einem Zwischenschritt der ersten Folge werden die zweiten Hartstoffpartikel 76 gemäß dem definierten zweiten Partikelmuster in der Schicht 84 des ersten Matrixwerkstoffs 74 angeordnet (FIG. 7C) und in einem zweiten Schritt der ersten Folge wird die Schicht 84 des ersten Matrixwerkstoffs 74 mittels des Powder bed fusion-Verfahrens aufgeschmolzen und mit dem bisherigen Schichtaufbau verbunden (FIG. 7D).

In einem ersten Schritt der zweiten Folge wird eine weitere Schicht **85** des ersten Matrixwerkstoffs 74 aufgetragen, in einem Zwischenschritt der zweiten Folge werden die zweiten Hartstoffpartikel 76 gemäß dem definierten zweiten Partikelmuster in der Schicht 85 des ersten Matrixwerkstoffs 74 angeordnet (FIG. 7E) und in einem zweiten Schritt der zweiten Folge wird die Schicht 85 des ersten Matrixwerkstoffs 74 mittels des Powder bed fusion-Verfahrens aufgeschmolzen und mit dem bisherigen Schichtaufbau verbunden. Nach der zweiten Folge ist das Bearbeitungssegment 71 fertig und wird aus dem Stützmaterial 81 entfernt (FIG. 7F).

## Patentansprüche

1. Verfahren zur Herstellung eines Bearbeitungssegmentes (11A, 11B; 21A, 21B; 31; 41; 51; 71) für ein Bearbeitungswerkzeug (10A, 10B; 20A, 20B; 30; 40) aus einem ersten pulverförmigen Matrixwerkstoff (54; 74) und ersten Hartstoffpartikeln (55; 75), die gemäss einem definierten ersten Partikelmuster angeordnet werden, wobei das Bearbeitungssegment mit einer Unterseite (58; 78) mit einem Grundkörper (12A, 12B; 22A, 22B; 32; 42) des Bearbeitungswerkzeuges (10A, 10B; 20A, 20B; 30; 40) verbunden wird, **gekennzeichnet durch** die Schritte:
▪ Auftragen eines Stützmaterials (61; 81) als Stützschicht (62; 82), wobei die Schmelztemperatur (T_{schmelz}) des Stützmaterials (61; 81) grösser als die Schmelztemperatur (T₁) des ersten Matrixwerkstoffes (54; 74) ist,
▪ Anordnen der ersten Hartstoffpartikel (55; 75) gemäß dem definierten ersten Partikelmuster im Stützmaterial (61; 81), wobei die ersten Hartstoffpartikel (55; 75) mit einer Eindringtiefe (dᵢₙ) im Stützmaterial (61; 81) angeordnet werden,
▪ Auftragen einer ersten Schicht (63; 83) des ersten Matrixwerkstoffs (54; 74) auf die ersten Hartstoffpartikel (55; 75) und das Stützmaterial (61; 81) und Aufschmelzen der ersten Schicht (63; 83) mittels eines Powder bed fusion-Verfahrens und
▪ Ausführen einer Folge von mehreren Schritten, die N-fach, N ≥ 1 ausgeführt wird, wobei in einem ersten Schritt der Folge eine Schicht (64; 84, 85) des ersten Matrixwerkstoffs (54; 74) auf den Schichtaufbau aufgetragen wird und in einem zweiten Schritt der Folge die Schicht (64; 84, 85) des ersten Matrixwerkstoffs (54; 74) mittels des Powder bed fusion-Verfahrens aufgeschmolzen und mit dem Schichtaufbau verbunden wird.

2. Verfahren nach Anspruch 1, **dadurch gekennzeichnet, dass** die Folge einen Zwischenschritt umfasst, der zwischen dem ersten und zweiten Schritt der Folge ausgeführt wird, wobei im Zwischenschritt zweite Hartstoffpartikel (76) gemäss einem definierten zweiten Partikelmuster in der Schicht (84, 85) des ersten Matrixwerkstoffs (74) angeordnet werden.

3. Verfahren nach Anspruch 1, **dadurch gekennzeichnet, dass** dem ersten Matrixwerkstoff (74) zweite Hartstoffpartikel (76) beigemischt werden, wobei ein mittlerer Partikeldurchmesser der zweiten Hartstoffpartikel (76) kleiner als ein mittlerer Partikeldurchmesser der ersten Hartstoffpartikel (75) ist.

4. Verfahren nach einem der Ansprüche 1 bis 3, **dadurch gekennzeichnet, dass** nach der N-ten Folge mindestens eine Schicht (65) eines zweiten pulverförmigen Matrixwerkstoffs (56) aufgetragen und mittels des Powder bed fusion-Verfahrens aufgeschmolzen und mit dem Schichtaufbau verbunden wird, wobei der zweite Matrixwerkstoff (56) vom ersten Matrixwerkstoff (54) verschieden ist.

5. Verfahren nach einem der Ansprüche 1 bis 4, **dadurch gekennzeichnet, dass** die ersten Hartstoffpartikel (55; 75) einen mittleren Partikeldurchmesser (dₘᵢₜₜₑₗ, d_{mittel,1}) aufweisen und maximal bis zum halben mittleren Partikeldurchmesser in das Stützmaterial (61; 81) eingebettet werden.
